# EUROPEAN PATENT SPECIFICATION

(11) **EP 4 718 021 B1**
(45) Date of publication and mention of the grant of the patent: **04.11.2026**
(21) Application number: 24203587.1
(22) Date of filing: 30.09.2024
(51) Int. Cl.: G01B 11/06, G01B 11/08, G01B 11/12, G01B 11/10, G01B 9/02055

(54) **METHOD FOR MEASURING AT LEAST ONE CROSS-SECTIONAL DIMENSION OF A CYLINDRICAL HOLLOW BODY**
VERFAHREN ZUR MESSUNG WENIGSTENS EINER QUERSCHNITTSABMESSUNG EINES ZYLINDRISCHEN HOHLKÖRPERS
PROCÉDÉ DE MESURE D'AU MOINS UNE DIMENSION DE SECTION TRANSVERSALE D'UN CORPS CREUX CYLINDRIQUE

(43) Date of publication of application: 01.04.2026
(73) Proprietor: SCHOTT AG, 55122 Mainz (DE)
(72) Inventor: HECHT, Alexander, 95666 Mitterteich (DE); VERES, Andreas, 95666 Mitterteich (DE); WITZMANN, André, 95679 Waldershof (DE); HOFBECK, Thomas, 95666 Mitterteich (DE)
(74) Representative: Schott Corporate IP

(56) References cited:
- US-A- 3 850 026
- US-A- 4 859 861
- US-A1- 2021 403 362

## Description

This disclosure relates to a method for measuring at least one cross-sectional dimension of a cylindrical hollow body, and an apparatus for measuring at least one cross-sectional dimension of a cylindrical hollow body. The method and apparatus provide for a more efficient measurement of geometrical properties of a cylindrical hollow body.

### Background

Cylindrical hollow bodies in the form of tubes are useful for the storage of pharmaceuticals when manufactured into pharmaceutical containers. The demands and standards for pharmaceutical containers are constantly increasing, aiming to provide and guarantee the quality of the transported pharmaceutical and to allow unhindered inspection of the stored pharmaceuticals, preferably with the naked eye.

Methods for measuring glass tubes and polymer tubes with respect to their geometric properties are known in the art. Different methods are used to determine the outer diameter, the inner diameter and the wall thickness. For the measurement of the outer diameter, transmission light methods are used in which the cast shadow is recorded by a camera and the obtained images are analysed to derive the outer diameter. The wall thickness is typically measured by chromatic confocal methods and interferometry methods. Both methods are suitable for measuring the wall thickness provided that the measurement axis of the respective measuring head is orthogonally oriented to the tube surface and thus runs through the centre of the tube cross-section. If that requirement is not met, a chromatic-confocal measurement method will result in measurement errors, and an interferometry method will suffer from signal breaks. Deviations from an orthogonal alignment in the said two methods may result from tube movements and/or tube vibrations. Said problem is most prominent in the case of glass tubes with increasingly curved surfaces, i.e., glass tubes with a small outer diameter, for which it is particularly difficult and sometimes practically impossible to establish an orthogonal alignment of the measurement axis with respect to the tube surface. Whereas there is no direct method for the measurement of the inner diameter, the inner diameter is typically calculated from the outer diameter and the wall thickness.

WO 2012/117353 A2 discloses an apparatus and a method for measuring the thickness of a wall of a transparent object. The wall comprises a transparent material arranged between a proximal interface, set between an environment and the transparent material, and a distal interface, set between said transparent material and the environment. The apparatus comprises a source of a starting light radiation and a means for focusing it, to obtain an entering light radiation directed towards the wall that hits the proximal interface of the wall of the object and is in part reflected, to generate a first reflected radiation. A part of the entering light radiation that is transmitted through the transparent material hits upon the distal interface and is in turn reflected and crosses in an opposite direction the transparent material through the proximal interface to generate a second reflected radiation. A collected radiation given by overlapping the first and second reflected radiations have a difference of intensity that is configured to obtain an interference, which allows determining the thickness of the wall. The means for focusing comprises a lens means that have two main meridians orthogonal to each other, such that the entering light radiation is focused on a first virtual focus in the first meridian plane, and on a second virtual focus in the second meridian plane. In this way, the collected radiation is substantially independent from possible movements of the transparent object which allows a reliable and robust measurement with respect to fluctuations and vibrations of the object.

WO 2021/024127 A1 discloses an apparatus and an optical detection method for the non-contact dimensional measuring of the inner diameter of a tube along a production line, wherein the apparatus comprises at least one thickness measure sensor of the optical type and at least one diameter measure sensor for measuring the outer diameter of the tube. Each diameter measure sensor and at least one thickness measure sensor are constrained to a supporting body to be radially oriented with respect to the geometric axis of the tube. The thickness measure sensor measures the thickness at a tube section belonging to the outer diameter of the tube detected by the diameter measure sensor. The thickness and diameter measure sensors are synchronized for measuring simultaneously. The inner diameter of the tube is calculated as the difference between the outer diameter and the thickness of the tube detected. The supporting body on which or in which the thickness measure sensors and diameter measure sensors are fixed ensures that the measures are on the same axis orthogonal to the geometric axis of the tube.

US4859861 B1 relates to an apparatus and method for finding the location of the inside wall of a transparent or translucent tube for the purpose of measuring the bore. US3850026 B1 refers to a method and a device for determining the cross-sectional dimensions of the inner space of elongated, tubular bodies.

There still remains a desire to provide an apparatus and a detection method which are more efficient than the ones described in the art.

### Summary of the invention

In one aspect, this disclosure provides a method according to claim 1.

Interferometric measurements rely on receiving at least two distinct light beams with a different light path. The two light beams may either interfere constructively or interfere destructively. The measurement of at least one cross-sectional dimension of a cylindrical hollow body may be compromised when the initial light beam does not reach the outer surface of the hollow body at a suitable angle in order to receive a portion of light reflected at the outer surface and to receive a portion of light reflected at the inner surface along the travel path at the interferometric device. In other words, if the initial light beam reaches the outer surface of the hollow body at an angle which is too far off an orthogonal angle, the said portions of light reflected at the outer surface and at the inner surface may not be detected. The described problem may heavily manifest itself on hollow bodies with a small outer diameter which would need to be perfectly mounted for the desired measurement. The described problem is also pronounced during measurements of hollow bodies in or along a production line, because mechanical vibrations may lead to signal fluctuations or even lack of signal at the detector. In view of that, the inventors developed a method which provides that a portion of light reflected at the outer surface and a portion of light reflected at the inner surface along the travel path at the interferometric device can be received even in the presence of mechanical vibrations of the hollow bodies. The developed method also does not require any specific mounting of the hollow body, as long as at least intermittently at least a portion of the light beam hits the outer surface of the hollow body. Accordingly, the method is characterized in that it comprises the step of varying an orientation of the travel path of the light beam towards the hollow body. Said feature provides that at least intermittently at least a portion of the light beam hits the outer surface of the hollow body at an angle which is sufficient to receive a portion of light reflected at the outer surface and receiving a portion of light reflected at the inner surface along the travel path at the interferometric device. By virtue of this feature, the incidental number of (successful) detections at the interferometric device is increased. The method of this disclosure is thus more reliable and more robust. The method of this disclosure also provides more data points for measuring at least one cross-sectional dimension of a cylindrical hollow body even in the presence of mechanical vibrations, e.g., in a production line, and/or on imperfectly mounted cylindrical hollow bodies. Provided that a certain data throughput is desired, the method of this disclosure is also faster because it provides more successful detection events.

In a second aspect, this disclosure provides an apparatus according to claim 12.

The disclosed apparatus solves the problems of the prior art and provides a more reliable and more robust measurement of cylindrical hollow bodies.

For interferometry measurements an essentially orthogonal alignment of the measuring axis to the tube surface is decisive to obtain a measurement value which originates from reflected light at each of the encountered interfaces, i.e., in case of a glass tube, at a first outer interface air/glass, at a first inner interface glass/air, at a second inner interface air/glass, and at a second outer interface glass/air. Each interferometry method specifies a relatively small acceptance angle. For example, the acceptance angle of a Precitec CHRocodile sensor is 2°. If the measurement axis deviates more than about half of the acceptance angle from a mathematically perfect orthogonal alignment to the tube surface, no measurement value is obtained.

By virtue of the scanner which can vary an orientation of the travel path of the emitted light beam more data points for measuring the at least one cross-sectional dimension of the cylindrical hollow body can be detected, even in the presence of mechanical vibrations and/or on imperfectly mounted cylindrical hollow bodies. The scanner varies the orientation of the travel path of the emitted light in such a way that a nearly orthogonal alignment of the measuring axis with respect to the surface of the hollow body is achieved more often than in a case where the travel path of the emitted light is static.

Both the method and apparatus according to this disclosure allow an interferometric measurement on a cylindrical hollow body which experiences imperfect orientation with respect to the light beam for example due to mechanical vibrations, e.g., resulting from the transport along a production line. The method and apparatus may also provide a direct measurement of a first wall thickness, an inner diameter, a second wall thickness, and/or an outer diameter along a single measurement axis. The method and apparatus are particularly suited for the measurement of glass tubes and polymer tubes with relatively small outer diameters.

In a third non-claimed aspect, this disclosure provides a cylindrical hollow body having a longitudinal axis, an outer surface and an inner surface, the hollow body having a first wall thickness (WT1), an inner diameter (ID), and a second wall thickness (WT2),
wherein the first wall thickness (WT1), the inner diameter (ID) and the second wall thickness (WT2) are measurable along any straight line which stands perpendicular on the longitudinal axis, and which straight line hypothetically cuts through the hollow body,
wherein the hollow body has an outer diameter (OD) of 6 mm or less,
wherein the hollow body has an inner diameter (ID) of 5 mm or less,
wherein the absolute difference between the first wall thickness (WT1) and the second wall thickness (WT2) is less than 0.01 mm, or less than 0.001 mm and/or
wherein the inner diameter has a tolerance of less than 0.01 mm, or less than 0.001 mm.

The method and apparatus of this disclosure helps provide cylindrical hollow bodies with excellent dimensional accuracy by allowing in-process control of relevant production parameters.

### Brief description of the figures

Figure 1A shows a cross-section of a hollow body according to this disclosure.
Figure 1B shows a cross-section of a further hollow body according to this disclosure.
Figure 2A shows a measurement setup according to the prior art.
Figure 2B shows the measurement setup according to the prior art, as depicted in Figure 2A.
Figure 3A shows a measurement setup according to this disclosure.
Figure 3B shows a further measurement setup according to this disclosure.

### Description of the figures

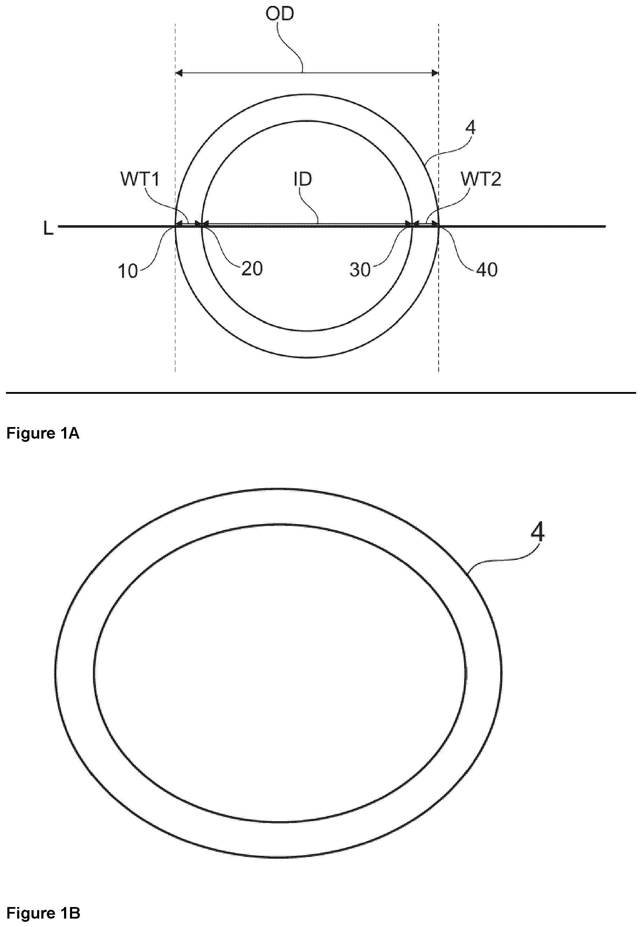

Figure 1A shows a cross-section of a hollow body (4) according to this disclosure indicating a first wall thickness (WT1), a second wall thickness (WT2), an inner diameter (ID) and an outer diameter (OD) along a straight line (L) passing through a diameter of the cross-section. Fictitious intersection points are denoted '10', '20', '30' and '40' along a travel path of a light beam.

Figure 1B shows a cross-section of a hollow body according to this disclosure with an inner cross-section and an outer cross-section, wherein the inner cross-section can be approximated as an inner ellipse, and wherein the outer cross-section can be approximated as an outer ellipse.

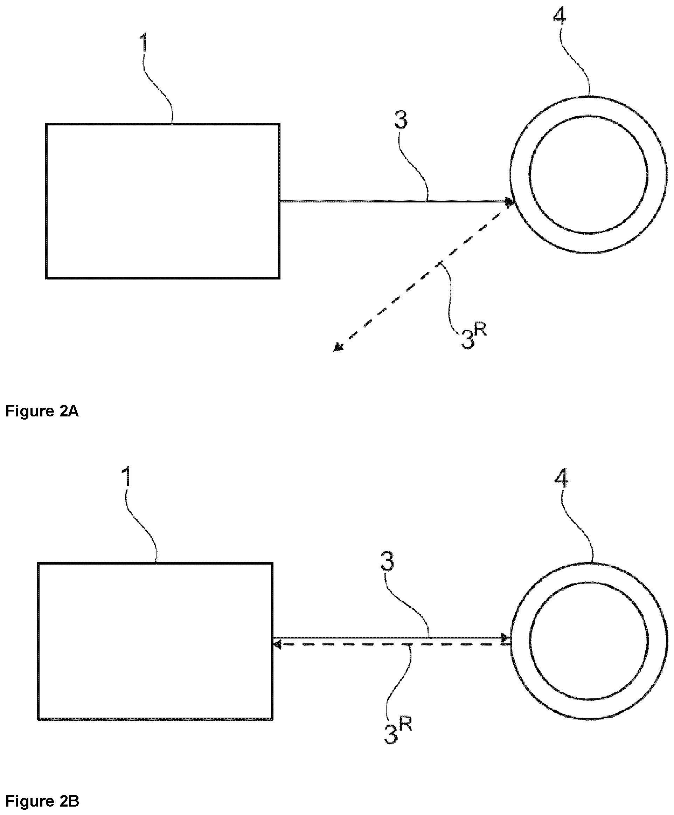

Figure 2A shows a measurement setup according to the prior art, indicating an interferometric device (1) emitting a light beam (3) towards the outer surface of a hollow body (4). A portion of the light beam (3) hits the outer surface of the hollow body (4). However, as indicated, if the axis of the light beam (3) is substantially off the corresponding diameter of the cross-section of the hollow body (4), reflected light (3^{R}) will not reach the interferometric device (1).

Figure 2B shows the measurement setup according to the prior art, as depicted in Figure 2A. Only if the axis of the light beam (3) is substantially parallel to the corresponding diameter of the cross-section of the hollow body (4), reflected light (3^{R}) will reach the interferometric device (1).

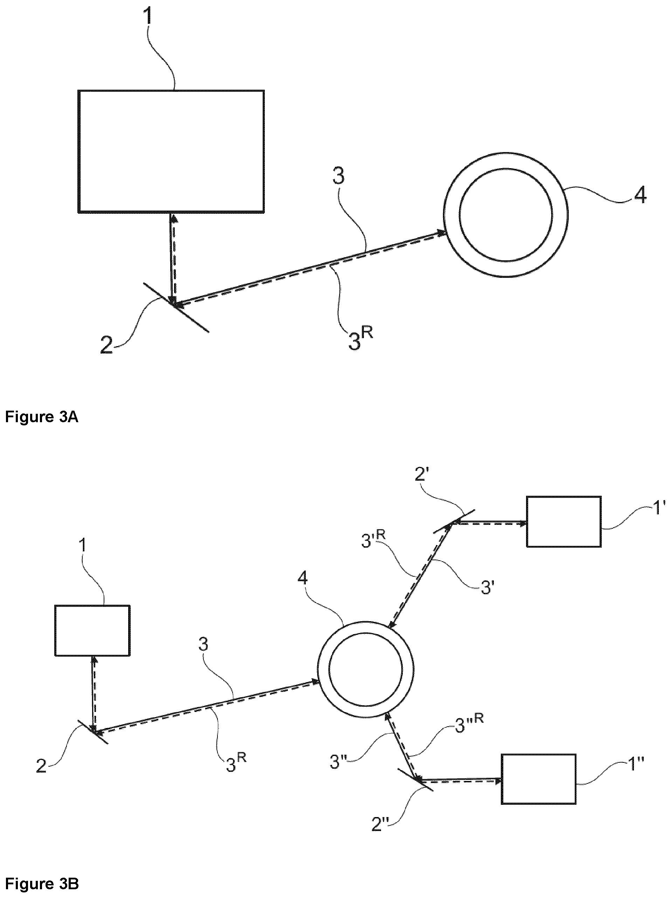

Figure 3A shows a measurement setup according to this disclosure, indicating an interferometric device (1), a scanner (2), the interferometric device (1) emitting a light beam (3) towards the outer surface of a hollow body (4). A portion of the light beam (3) hits the outer surface of the hollow body. By virtue of the scanner, the axis of the light beam (3) can be varied, such that there are instances where the light beam (3) is substantially parallel to a corresponding diameter of the cross-section of the hollow body (4). Hence, reflected light (3^{R}) will reach the interferometric device (1).

Figure 3B shows a further measurement setup according to this disclosure with an interferometric device (1), a scanner (2), the interferometric device (1) emitting a light beam (3) towards the outer surface of a hollow body (4), a second interferometric device (1'), a second scanner (2'), the second interferometric device (1') emitting a second light beam (3') towards the outer surface of the hollow body (4), a third interferometric device (1"), a third scanner (2"), the third interferometric device (1") emitting a third light beam (3") towards the outer surface of the hollow body (4). By virtue of the scanners (2, 2', 2"), the axes of the light beams (3, 3', 3") can be varied, such that there are instances where the light beams (3, 3', 3") are substantially parallel to a corresponding diameter of the cross-section of the hollow body (4). Hence, reflected light (3^{R}, 3'^{R}, 3"^{R}) will reach the interferometric device (1).

### Detailed description

### Method

In one aspect, this disclosure provides a method according to claim 1.

According to this disclosure, the cylindrical hollow body has a wall surrounding a lumen, a longitudinal axis, an inner surface and an outer surface. Theoretically, the cylindrical hollow body may take the form of a mathematically perfect cylinder. However, the cylindrical hollow body may have an overall cylindrical shape with technically acceptable deviations regarding its inner diameter, its outer diameter and the thickness of the wall along its length. The cylindrical hollow body may be a finite cylinder or may represent a portion of a larger body, wherein the said portion has an overall cylindrical shape with the said technically acceptable deviations. The wall shall be understood as a physical barrier of a certain wall thickness, wherein the physical barrier may be constructed of different materials, such as, e.g., glass or polymer. The lumen shall be understood as an inner volume which may be evacuated, or filled with air, or filled with a gas mixture.

According to the invention, the at least one cross-sectional dimension of the hollow body includes a first wall thickness (WT1), an inner diameter (ID), a second wall thickness (WT2), and the outer diameter (OD).

Figure 1 shows a cross-section of the hollow body according to this disclosure. Any diameter passing through the cross-section will fictitiously cut the hollow body across the wall on a left side and a right side, from an arbitrary viewpoint along the longitudinal axis, which matches a first wall thickness (WT1) and a second wall thickness (WT2). The fictitious intersection points are denoted '10', '20', '30' and '40' along the travel path of the light beam. The distance between the intersection points '20' and '30' of the said diameter at the inner surface of the wall represents the inner diameter (ID). The distance between the intersection points '10' and '40' of the said diameter at the outer surface of the wall represents the outer diameter (OD). For a mathematically perfect cylindrical body, the outer diameter could be calculated as OD = WT1 + ID + WT2. However, according to this disclosure, the outer diameter is accessible through measurement of a cylindrical hollow body having an overall cylindrical shape with technically acceptable deviations regarding its inner diameter, and the thickness of the wall along its length, so that the mathematical equation may not be strictly fulfilled for all real-world scenarios.

The method relies on receiving a portion of light reflected at the outer surface and receiving a portion of light reflected at the inner surface along the travel path at the interferometric device in order to calculate the at least one cross-sectional dimension of the hollow body. Provided that a sufficient portion of reflected light is received from a first intersection point '10' and a second intersection point '20', the first wall thickness can be measured. Provided that a further sufficient portion of reflected light is received from a third intersection point '30', the inner diameter can be measured. Provided that yet a further sufficient portion of reflected light is received from a fourth intersection point '40', the second wall thickness and the outer diameter can be measured.

The method relies also on receiving a portion of light reflected at the outer surface. For example, if the hollow body is filled with a medium which is close or matched in refractive index with respect to the material of the hollow body, a sufficient portion of reflected light may be received from a first intersection point '10' and a fourth intersection point '40', so that the outer diameter can be measured. Accordingly, the method allows measuring, e.g., vials filled with a water-glycerine solution, optionally containing one or more pharmaceutical ingredients and/or other ingredients.

The method is advantageous because the step of varying an orientation of the travel path of the light beam towards the hollow body provides that sufficient portions of reflected light may be detected from any or all of the fictitious intersection points, i.e., the first intersection point '10', the second intersection point '20', the third intersection point '30' and the fourth intersection point '40' along the travel path of the light beam. By virtue of said feature, the probability of detecting sufficient portions of reflected light is increased compared to a static situation in which the travel path of the light beam towards the hollow body is permanent with respect to the reference frame of the interferometric device.

In one embodiment of the method, the hollow body is a glass tube or a glass tube strand, wherein the glass tube or glass tube strand is optionally conveyed from a production line, such as a Vello or down-draw method, or alternatively a Danner method, in a direction substantially parallel to the glass tube strand's longitudinal axis, and/or wherein the glass tube or glass tube strand is rotated around the glass tube's longitudinal axis and/or wherein the glass tube is moved in translation to the glass tube's longitudinal axis.

In one embodiment, the hollow body is made from a glass tube, such as, e.g., a vial, an ampoule, a syringe. The glass tube may also be a cut glass tube section. In one embodiment, the glass tube may have two open ends. In one embodiment, the glass tube may have two closed ends. In one embodiment, the glass tube may have one open end and one closed end.

In one embodiment, the hollow body is a glass tube strand which is obtainable from a production line, such as a Vello or down-draw method, or alternatively a Danner method. In said production processes, an "infinitely long" glass tube strand is drawn from a glass melt. Typically, after passing a roller track and a subsequent drawing machine, glass tube sections may be obtained by cutting the glass tube strand. In the said industrial production processes, the glass tube sections are often approximately 1.5 m long. The method according to this disclosure is applicable to glass tube strands before and/or after passing a roller track and/or after passing a subsequent drawing machine.

The method according to this disclosure may be performed on a fixed hollow body or a moving hollow body. A fixed hollow may, e.g., be firmly clamped, or moving with respect to the reference frame of the interferometric device. Accordingly, glass tube sections, vials, ampoules and/or syringes may be measured when mounted or they may be moving, i.e., translating or rotating. In one embodiment of the method, glass tube sections, vials, ampoules and/or syringes may be rotated around their longitudinal axis. In one embodiment of the method, glass tube sections, vials, ampoules and/or syringes may be transported along their longitudinal axis. In one embodiment of the method, the glass tube strand is rotated around its longitudinal axis. In one embodiment of the method, the glass tube strand is transported along its longitudinal axis.

The method according to this disclosure is also advantageous for measurements in a fixed situation, because a mounted glass tube or glass tube strand is unlikely to be perfectly oriented to obtain sufficient portions of reflected light from the first intersection point '10', the second intersection point '20', preferably also the third intersection point '30' and preferably also the fourth intersection point '40', in the absence of varying an orientation of the travel path of the light beam towards the hollow body. Varying the orientation of the travel path of the light beam towards the hollow body increases the chance of detecting sufficient portions of reflected light from said fictitious intersection points. This feature also provides for reducing the measurement time because time-consuming adjustments of the orientation of specimen or measuring device are not necessary.

In one embodiment of the method, the hollow body comprises or consists of a glass composition or a polymer material, wherein preferably the glass composition is transparent at a wavelength, or alternatively at a wavelength range, of the light beam, wherein preferably the polymer material is transparent at a wavelength, or alternatively at a wavelength range, of the light beam.

Within this disclosure, a "transparent" glass composition, respectively, a transparent polymer material, has a transmittance of at least 30% for at least one measurement wavelength, e.g., in the wavelength range of 300 to 5000 nm, measured at the wall thickness of the cylindrical hollow body (in particular WT1), and optionally a transmission haze value of less than 1.0%, wherein the transmission haze value refers to the amount of light that is subject to scattering at an angle greater than 2.5° from normal, measured according to ASTM D1003 - 13 (Procedure A-Hazemeter), using CIE Standard Illuminant C. In an alternative embodiment, a "transparent" glass composition, respectively, a transparent polymer material, may have a transmittance of at least 50%, or at least 70%, for at least one measurement wavelength, measured at the wall thickness of the cylindrical hollow body (in particular WT1), and optionally a transmission haze value of less than 1.0%.

In one embodiment, a glass composition or a polymer material according to this disclosure have a transmittance of at least 30% in the wavelength range of 300 to 750 nm, measured at a thickness of 1 mm. In one embodiment, a glass composition or a polymer material according to this disclosure have a transmittance of at least 50% in the wavelength range of 300 to 750 nm, measured at a thickness of 1 mm. In one embodiment, a glass composition or a polymer material according to this disclosure have a transmittance of at least 70% in the wavelength range of 300 to 750 nm, measured at a thickness of 1 mm. In one embodiment, a glass composition or a polymer material according to this disclosure have a transmittance of at least 90% in the wavelength range of 300 to 750 nm, measured at a thickness of 1 mm.

In one embodiment, a glass composition or a polymer material according to this disclosure have a transmittance of at least 30% in the wavelength range of 750 to 2500 nm, measured at a thickness of 1 mm. In one embodiment, a glass composition or a polymer material according to this disclosure have a transmittance of at least 50% in the wavelength range of 750 to 2500 nm, measured at a thickness of 1 mm. In one embodiment, a glass composition or a polymer material according to this disclosure have a transmittance of at least 70% in the wavelength range of 750 to 2500 nm, measured at a thickness of 1 mm. In one embodiment, a glass composition or a polymer material according to this disclosure have a transmittance of at least 90% in the wavelength range of 750 to 2500 nm, measured at a thickness of 1 mm.

In one embodiment, the hollow body has a surface roughness on the outer surface and the inner surface of 1 nm to 5000 nm, or 10 nm to 3000 nm, or 50 nm to 2000 nm, or 70 nm to 1000 nm, or 100 nm to 500 nm, determined according to ISO 25178 - 2:2012. In one embodiment, the hollow body has a surface roughness on the outer surface and the inner surface of 1 nm or more, or 10 nm or more, or 50 nm or more, or 70 nm or more, or 100 nm or more. In one embodiment, the hollow body has a surface roughness on the outer surface and the inner surface of 5000 nm or less, or 3000 nm or less, or 2000 nm or less, or 1000 nm or less, or 500 nm or less.

According to the invention, the light beam is a focussed light beam which is focussed on the outer surface of the hollow body, wherein the focussed light beam preferably comprises or consists of coherent, monochromatic light. Advantageously, using a focussed light beam provides a larger intensity upon receiving a portion of light reflected at the outer surface and upon receiving a portion of light reflected at the inner surface. Likewise, a portion of reflected light received from the third intersection point '30', and the fourth intersection point '40', may be detected with a larger intensity. Thereby, the number of successful detection events may be increased.

In one non-claimed embodiment of the method, the light beam is a collimated light beam. This option hypothetically provides that equal portions of light may reach the first intersection point '10', the second intersection point '20', the third intersection point '30', and the fourth intersection point '40' when neglecting absorption effects.

In one embodiment of the method, the light beam comprises or consists of coherent, monochromatic light.

In one embodiment of the method, the step of directing a light beam is effected by a scanner which is operable at a mechanical scanning frequency between 10 and 1000 Hz, preferably between 200 and 300 Hz, and/or wherein the apparatus is operable at a data sampling frequency of up to 100 kHz, preferably between 60 to 70 kHz.

In one embodiment, the scanner operates in a one-dimensional fashion, wherein the scanner is mounted in such a way that a vector of the light beam directed towards the outer surface of the hollow body and a vector parallel to the longitudinal axis of the cylindrical hollow body are perpendicular to each other. This alignment ensures that upon scanning there are instances where the light beam directed towards the outer surface of the hollow body subtends the longitudinal axis of the cylindrical hollow body perpendicularly, which allows receiving a portion of light reflected at the outer surface and receiving a portion of light reflected at the inner surface along the travel path at the interferometric device.

In one embodiment, the scanner operates in a two-dimensional fashion. Two-dimensional scanning bears the advantage that the mounting of the scanner does not require any specific alignment of the light beam directed towards the outer surface of the hollow body. Two-dimensional scanning, by virtue of its nature, ensures that upon scanning there are instances where the light beam directed towards the outer surface of the hollow body subtends the longitudinal axis of the cylindrical hollow body perpendicularly, which allows receiving a portion of light reflected at the outer surface and receiving a portion of light reflected at the inner surface along the travel path at the interferometric device.

In one embodiment of the method, the step of obtaining the at least one cross-sectional dimension of the hollow body records a timestamp for each value obtained. Statistical data can thereby be generated and further analysed. For example, in a fixed situation, wherein the hollow body is mounted in a fixed position, e.g., a glass tube or a glass tube strand, several values for the cross-sectional dimension, WT1, ID, WT2, as well as OD, are obtained at one and the same diagonal axis within a fixed cross-section of the hollow body. In case hollow body is rotated, e.g., the glass tube or glass tube strand is rotated around the glass tube's longitudinal axis, several values for WT1, ID, WT2, and OD, may be obtained for different diagonal axes within a fixed cross-section of the hollow body. In cases, wherein the glass tube or glass tube strand is conveyed from a production line, such as a Vello or down-draw method, or alternatively a Danner method, in a direction substantially parallel to the glass tube strand's longitudinal axis, and/or wherein the glass tube is moved in translation to the glass tube's longitudinal axis, individual values for the cross-sectional dimension, WT1, ID, and further also WT2, as well as OD, are obtained from different cross-sections of the hollow body.

In one embodiment of the method, wherein the hollow body is a glass tube or a glass tube strand, the conveying of the glass tube proceeds at a velocity between 0.001 and 6 m s⁻¹, or 0.005 and 5 m s⁻¹, or 0.01 and 4 m s⁻¹, or 0.05 and 3 m s⁻¹, or 0.1 and 2 m s⁻¹. In one embodiment, the conveying of the glass tube proceeds at a velocity of 0.001 m s⁻¹ or more, or 0.005 m s⁻¹ or more, or 0.01 m s⁻¹ or more, or 0.05 m s⁻¹ or more, or 0.1 m s⁻¹ or more. In one embodiment, the conveying of the glass tube proceeds at a velocity of 6 m s⁻¹ or less, or 5 m s⁻¹ or less, or 4 m s⁻¹ or less, or 3 m s⁻¹ or less, or 2 m s⁻¹ or less.

In one embodiment, the wall of the cylindrical hollow body has a thickness of 0.1 to 20.0 mm, or 0.2 to 10.0 mm, or 0.3 to 6.5 mm, or 0.5 to 4.0 mm, or 0.5 to 2.0 mm. The wall thickness of the cylindrical hollow body may relate to or may match the first wall thickness (WT1) and/or the second wall thickness (WT2) of the at least one cross-sectional dimension of the hollow body. In one embodiment, the wall thickness is 0.1 mm or more, or 0.2 mm or more, or 0.3 mm or more, or 0.5 mm or more. In one embodiment, the wall thickness is 20.0 mm or less, or 10.0 mm or less, or 6.5 mm or less, or 4.0 mm or less, or 2.0 mm or less.

In one embodiment, the method comprises the further steps of
- Directing a second light beam along a second travel path from a second interferometric device towards the outer surface of the hollow body, and receiving a portion of light reflected at another tangential plane of the outer surface and a portion of light reflected at another tangential plane of the inner surface along the second travel path at the second interferometric device; and optionally
- Directing a third light beam along a third travel path from a third interferometric device towards the outer surface of the hollow body and receiving a portion of light reflected at yet another tangential plane of the outer surface and a portion of light reflected at yet another tangential plane of the inner surface along the third travel path at the third interferometric device.

Advantageously, receiving portions of light reflected at three distinct tangential planes of the outer surface and receiving portions of light reflected at three distinct tangential planes of the inner surface offers the potential of simultaneous detections of the first wall thickness (WT1) at three distinct locations of the hollow body. The hollow body has an inner cross-section and an outer cross-section, wherein the inner cross-section can be approximated as an inner ellipse, and wherein the outer cross-section can be approximated as an outer ellipse. The inner ellipse has an inner eccentricity. The outer ellipse has an outer eccentricity. According to this disclosure, the eccentricity e is calculated as $e = sqrt \left(1-\left({b}^{2}/{a}^{2}\right)\right) ,$ wherein a is the major axis of the ellipse, and wherein b is the minor axis of the ellipse. This configuration allows approximating and/or measuring the eccentricity e, as well as the length of the major axis a and the length of the minor axis b for both the inner ellipse and the outer ellipse of the hollow body.

In one embodiment, the method comprises the further steps of
- Directing a fourth light beam along a fourth travel path from a fourth interferometric device towards the outer surface of the hollow body, and receiving a portion of light reflected at a further tangential plane of the outer surface and a portion of light reflected at a further tangential plane of the inner surface along the fourth travel path at the fourth interferometric device; and
- Directing a fifth light beam along a fifth travel path from a fifth interferometric device towards the outer surface of the hollow body and receiving a portion of light reflected at yet a further tangential plane of the outer surface and a portion of light reflected at yet a further tangential plane of the inner surface along the fifth travel path at the fifth interferometric device.

Receiving portions of light reflected at five distinct tangential planes of the outer surface and receiving portions of light reflected at five distinct tangential planes of the inner surface further improves the potential of simultaneous detections of the first wall thickness (WT1) at five distinct locations of the hollow body.

In one embodiment of the method, the travel path of the light beam directed towards the outer surface of the hollow body, the second travel path of the second light beam directed towards the outer surface of the hollow body, and the third travel path of the third light beam directed towards the outer surface of the hollow body, lie in the same geometrical plane.

In one embodiment of the method, the travel path of the light beam directed towards the outer surface of the hollow body, the second travel path of the second light beam directed towards the outer surface of the hollow body, and the third travel path of the third light beam directed towards the outer surface of the hollow body, each lie in mutually exclusive geometrical planes.

In one embodiment of the method, the travel path of the light beam directed towards the outer surface of the hollow body, the second travel path of the second light beam directed towards the outer surface of the hollow body, the third travel path of the third light beam directed towards the outer surface of the hollow body, the fourth travel path of the fourth light beam directed towards the outer surface of the hollow body, and the fifth travel path of the fifth light beam directed towards the outer surface of the hollow body, lie in the same geometrical plane.

In one embodiment of the method, at least two of the travel path of the light beam directed towards the outer surface of the hollow body, the second travel path of the second light beam directed towards the outer surface of the hollow body, the third travel path of the third light beam directed towards the outer surface of the hollow body, the fourth travel path of the fourth light beam directed towards the outer surface of the hollow body, and the fifth travel path of the fifth light beam directed towards the outer surface of the hollow body, lie in the same geometrical plane.

In one embodiment of the method, at least three of the travel path of the light beam directed towards the outer surface of the hollow body, the second travel path of the second light beam directed towards the outer surface of the hollow body, the third travel path of the third light beam directed towards the outer surface of the hollow body, the fourth travel path of the fourth light beam directed towards the outer surface of the hollow body, and the fifth travel path of the fifth light beam directed towards the outer surface of the hollow body, lie in the same geometrical plane.

In one embodiment of the method, at least four of the travel path of the light beam directed towards the outer surface of the hollow body, the second travel path of the second light beam directed towards the outer surface of the hollow body, the third travel path of the third light beam directed towards the outer surface of the hollow body, the fourth travel path of the fourth light beam directed towards the outer surface of the hollow body, and the fifth travel path of the fifth light beam directed towards the outer surface of the hollow body, lie in the same geometrical plane.

### Apparatus

In a second aspect, this disclosure provides an apparatus according to claim 12.

The disclosed apparatus solves the problems of the prior art and provides a more reliable and more robust measurement of cylindrical hollow bodies.

According to the present disclosure, an interferometric device detects and analyses properties of physical objects, e.g., cylindrical hollow bodies, by way of interference. To this end, for a single interferometric device, light from a single source is split into two or more reflected beams that travel in different optical paths, which are then combined again to produce interference. Both coherent and incoherent light sources can be used. The resulting interference pattern gives access to geometrical properties of the investigated physical objects.

According to the present disclosure, a scanner is an element that can realise a change in the beam direction in a specific angular range along a measuring axis. The scanner does not provide for a beam expansion. The measuring axis of the interferometric device sweeps through a relevant angular range with respect to the cylindrical hollow body by virtue of the scanner. If the measuring axis hits the outer surface of the hollow body, a portion of light reflected at the outer surface may be received and a portion of light reflected at the inner surface may be received along the travel path at the interferometric device. From the said two portions of light reflected at the outer surface and light reflected at the inner surface, a measurement of the first wall thickness (WT1) can be obtained.

In one embodiment, the scanner is selected from the list of a piezoelectric scanner, a galvanometer scanner, a prism scanner and a MEMS mirror scanner. The scanner may be chosen such to provide a sufficient throughput of measurement values. In one embodiment, the scanner is operable at a mechanical scanning frequency between 10 and 1000 Hz, preferably between 200 and 300 Hz. In one embodiment, the scanner is operable at a data sampling frequency of up to 100 kHz, preferably between 60 to 70 kHz.

In one embodiment, the interferometric device is a Fizeau interferometer, a Mach-Zehnder interferometer, a Michelson interferometer or a Czerny-Turner spectrometer. Preferably the interferometric device is a Czerny-Turner spectrometer.

The apparatus further comprises a focussing means, and wherein the apparatus is mountable in relation to a conveying means suitable for conveying a cylindrical hollow body in a direction substantially parallel to the cylindrical hollow body's longitudinal axis.

In one embodiment, the focussing means is selected from the list of a biconvex lens, a plano-convex lens, a cylindrical lens, and a compound lens.

In one embodiment, the conveying means is selected from the list of rails, rollers, belts, and a positioning frame.

In one embodiment, the apparatus further comprises a second interferometric device, a second scanner, and optionally a third interferometric device and a third scanner,
wherein the second interferometric device, and the second scanner are functionally arranged in the same way as the interferometric device and the scanner in relation to another tangential plane of the outer surface of the hollow body,
wherein, if present, the third interferometric device, and the third scanner are functionally arranged in the same way as the interferometric device and the scanner in relation to yet another tangential plane of the outer surface of the hollow body.

In one embodiment of the apparatus, the interferometric device, the scanner, the second interferometric device, the second scanner, the third interferometric device and the third scanner are arranged in one geometrical plane. This advantageous arrangement provides that several data points, i.e., values, in one cross-sectional dimension of the cylindrical hollow body may be measured. This arrangement thus provides access to receiving portions of light reflected at three distinct tangential planes of the outer surface and receiving portions of light reflected at three distinct tangential planes of the inner surface, from which simultaneous detections of the first wall thickness (WT1) at three distinct locations of the hollow body may be made. This arrangement allows approximating and/or measuring the eccentricity e of the hollow body, as well as the length of the major axis a and the length of the minor axis b for both the inner ellipse and the outer ellipse of the hollow body.

In one embodiment, the interferometric device, the scanner, the second interferometric device, the second scanner, the third interferometric device and the third scanner are integrated into a single apparatus, preferably the apparatus according to this disclosure.

In one embodiment, the apparatus further comprises a fourth interferometric device, a fourth scanner, and optionally a fifth interferometric device and a fifth scanner,
wherein the fourth interferometric device, and the fourth scanner are functionally arranged in the same way as the interferometric device and the scanner in relation to another tangential plane of the outer surface of the hollow body,
wherein, if present, the fifth interferometric device, and the fifth scanner are functionally arranged in the same way as the interferometric device and the scanner in relation to yet another tangential plane of the outer surface of the hollow body.

In one embodiment of the apparatus, the interferometric device, the scanner, the second interferometric device, the second scanner, the third interferometric device, the third scanner, the fourth interferometric device, the fourth scanner, the fifth interferometric device and the fifth scanner are arranged in one geometrical plane.

In one embodiment, the interferometric device, the scanner, the second interferometric device, the second scanner, the third interferometric device, the third scanner, the fourth interferometric device, the fourth scanner, the fifth interferometric device and the fifth scanner are integrated into a single apparatus, preferably the apparatus according to this disclosure.

### Cylindrical hollow body

In a third non-claimed aspect, this disclosure provides a cylindrical hollow body having a longitudinal axis, an outer surface and an inner surface, the hollow body having a first wall thickness (WT1), an inner diameter (ID), and a second wall thickness (WT2),
wherein the first wall thickness (WT1), the inner diameter (ID) and the second wall thickness (WT2) are measurable along any straight line which stands perpendicular on the longitudinal axis, and which straight line hypothetically cuts through the hollow body,
wherein the hollow body has an outer diameter (OD) of 6 mm or less,
wherein the hollow body has an inner diameter (ID) of 5 mm or less,
wherein the absolute difference between the first wall thickness (WT1) and the second wall thickness (WT2) is less than 0.01 mm, or less than 0.005 mm, or less than 0.003 mm, or less than 0.001 mm and/or
wherein the inner diameter has a tolerance of less than 0.01 mm, or less than 0.005 mm, or less than 0.003 mm, or less than 0.001 mm.

The approaches according to this disclosure allow for the first time the measurement of cylindrical hollow bodies with small diameters and thus enable an improved in-process control of the manufacturing of such cylindrical hollow bodies.

According to this disclosure, the absolute difference between the first wall thickness (WT1) and the second wall thickness (WT2) may be assessed for any data pair along any straight line which stands perpendicular on the longitudinal axis, and which straight line hypothetically cuts through the hollow body at any position.

In one embodiment, the absolute difference between the first wall thickness (WT1) and the second wall thickness (WT2) is less than 0.01 mm, or less than 0.007 mm, or less than 0.005 mm, or less than 0.003 mm, or less than 0.001 mm. In one embodiment, the absolute difference between the first wall thickness (WT1) and the second wall thickness (WT2) is at least 0.00001 mm, or at least 0.0001 mm.

According to this disclosure, the tolerance of the inner diameter is assessed for any straight line which stands perpendicular on the longitudinal axis, and which straight line hypothetically cuts through the hollow body at any position.

In one embodiment, the inner diameter has a tolerance of less than 0.01 mm, or less than 0.007 mm, or less than 0.005 mm, or less than 0.003 mm, or less than 0.001 mm. In one embodiment, the inner diameter has a tolerance of at least 0.0001 mm.

In one embodiment, the hollow body has an inner cross-section and an outer cross-section, wherein the inner cross-section can be approximated as an inner ellipse, and wherein the outer cross-section can be approximated as an outer ellipse,
wherein the inner ellipse has an inner eccentricity of less than 0.1, or less than 0.03, or less than 0.01,
wherein the outer ellipse has an outer eccentricity of less than 0.1, or less than 0.03, or less than 0.01.

In one embodiment, the inner ellipse has an inner eccentricity of at least 0.0001, or at least 0.0003, or at least 0.001. In one embodiment, the inner ellipse has an inner eccentricity of 0.0001 to 0.1, or 0.0003 to 0.03, or 0.001 to 0.01.

In one embodiment, the outer ellipse has an outer eccentricity of at least 0.0001, or at least 0.0003, or at least 0.001. In one embodiment, the outer ellipse has an outer eccentricity of 0.0001 to 0.1, or 0.0003 to 0.03, or 0.001 to 0.01.

### Examples

### Apparatus

An apparatus according to this disclosure was constructed using a scanner and scanner controller from Thorlabs (GVS011), a standard Windows 10 PC system, the software Chrocodile Explorer 1.3.5 (Precitec), a frequency generator TG120 (TTi) and a Chrocodile 2 IT 1300 (Precitec) as interferometer.

### Approach

The apparatus was arranged around the production line of a glass tube shortly before the glass tube is cut into single pieces: The apparatus was adjusted in such a way that the laser beam passes through the longitudinal axis of the glass tube with the scanner in neutral position while the glass tube section and the conveying means are arranged orthogonally to the laser beam. Then, the measurement was initiated.

### Measurements

The following glass tube dimensions were investigated (WT = wall thickness, OD = outer diameter): 1) WT = 0.30 mm and OD = 1.40 mm, 2) WT = 0.40 mm and OD = 1.25 mm, 3) WT = 0.50 mm and OD = 2.10 mm, 4) WT = 0.65 mm and OD = 1.85 mm, 5) WT = 0.77 mm and OD = 2.65 mm. The following parameters were directly accessible: i) at least one of the wall thicknesses WT1 and/or WT2, ii) the inner diameter (ID), iii) the inner diameter (ID) and one of the wall thicknesses WT1 or WT2, iv) the outer diameter (OD). The said parameters could be measured with a deviation of less than 0.005 mm with respect to the actual value. The actual value of the inner diameter (ID) was measured using a gauge.

## Claims

1. Method for measuring at least one cross-sectional dimension of a cylindrical hollow body (4), the hollow body (4) having a wall surrounding a lumen, a longitudinal axis, an inner surface and an outer surface, the method comprising the steps of
- Providing a cylindrical hollow body (4),
- Directing a light beam (3) by means of a scanner (2) along a travel path from an interferometric device (1) towards the outer surface of the hollow body (4), such that at least intermittently at least a portion of the light beam hits the outer surface of the hollow body, wherein the light beam (3) is a focussed light beam which is focussed by means of focussing means on the outer surface of the hollow body
- Receiving a portion of light (3R) reflected at the outer surface and receiving a portion of light reflected at the inner surface along the travel path at the interferometric device (1), and
- Obtaining at least one cross-sectional dimension of the hollow body (4) based on an interferometric measurement of the portion of light (3R) reflected at the outer surface and the portion of light reflected at the inner surface, **characterized in that** the method comprises the step of
- Varying an orientation of the travel path of the light beam (3) towards the hollow body (4), and wherein the at least one cross-sectional dimension of the hollow body includes a first wall thickness (WT1), an inner diameter (ID), a second wall thickness (WT2), and also includes the outer diameter (OD).

2. Method according to claim 1, wherein the hollow body is a glass tube or a glass tube strand.

3. Method according to claim 2, wherein the glass tube or glass tube strand is conveyed from a production line, such as a Vello or down-draw method, or alternatively a Danner method, in a direction substantially parallel to the glass tube strand's longitudinal axis, and/or wherein the glass tube or glass tube strand is rotated around the glass tube's longitudinal axis and/or wherein the glass tube is moved in translation to the glass tube's longitudinal axis.

4. Method according to any one of claims 1 to 3, wherein the hollow body comprises or consists of a glass composition or a polymer material, wherein preferably the glass composition is transparent at a wavelength, or alternatively at a wavelength range, of the light beam, wherein preferably the polymer material is transparent at a wavelength, or alternatively at a wavelength range, of the light beam.

5. Method according to any one of claims 1 to 4, wherein the hollow body has a surface roughness on the outer surface and the inner surface of 1 nm to 5000 nm, or 10 nm to 3000 nm, or 50 nm to 2000 nm, or 70 nm to 1000 nm, or 100 nm to 500 nm, determined according to ISO 25178 - 2:2012.

6. Method according to any one of claims 1 to 5, wherein the focussed light beam preferably comprises or consists of coherent, monochromatic light.

7. Method according to any one of claims 1 to 6, wherein the step of directing a light beam is effected by the scanner which is operable at a mechanical scanning frequency between 10 and 1000 Hz, preferably between 200 and 300 Hz, and/or wherein the apparatus is operable at a data sampling frequency of up to 100 kHz, preferably between 60 to 70 kHz.

8. Method according to any one of claims 1 to 7, wherein the step of obtaining the at least one cross-sectional dimension of the hollow body records a timestamp for each value obtained.

9. Method according to claim 3, wherein the conveying of the glass tube proceeds at a velocity between 0.001 and 6 m s⁻¹.

10. Method according to any one of claims 1 to 9, wherein the wall of the cylindrical hollow body has a thickness of 0.1 to 20.0 mm, or 0.2 to 10.0 mm, or 0.3 to 6.5 mm, or 0.5 to 4.0 mm.

11. Method according to any one of claims 1 to 10, wherein the method comprises the further steps of
- Directing a second light beam along a second travel path from a second interferometric device towards the outer surface of the hollow body, and receiving a portion of light reflected at another tangential plane of the outer surface and a portion of light reflected at another tangential plane of the inner surface along the second travel path at the second interferometric device; and optionally
- Directing a third light beam along a third travel path from a third interferometric device towards the outer surface of the hollow body and receiving a portion of light reflected at yet another tangential plane of the outer surface and a portion of light reflected at yet another tangential plane of the inner surface along the third travel path at the third interferometric device.

12. Apparatus for measuring at least one cross-sectional dimension of a cylindrical hollow body (4), wherein the at least one cross-sectional dimension of the hollow body includes a first wall thickness (WT1), an inner diameter (ID), a second wall thickness (WT2), and also includes the outer diameter (OD),
the apparatus configured to carry out the method of claim 1 and comprising at least one interferometric device (1), focusing means, and a scanner (2),
wherein the scanner (2) is arrangeable to direct an emitted light beam (3) from the at least one interferometric device (1) along a travel path towards an outer surface of the hollow body (4),
**characterized in that** the scanner is capable of varying an orientation of the travel path of the emitted light beam (3).

13. Apparatus according to claim 12, wherein the scanner is selected from the list of a piezoelectric scanner, a galvanometer scanner, a prism scanner and a MEMS mirror scanner, and/or wherein the interferometric device is a Fizeau interferometer, a Mach-Zehnder interferometer, a Michelson interferometer or a Czerny-Turner spectrometer, preferably the interferometric device is a Czerny-Turner spectrometer.

14. Apparatus according to claim 12 or claim 13, wherein the apparatus is mountable in relation to a conveying means suitable for conveying a cylindrical hollow body in a direction substantially parallel to the cylindrical hollow body's longitudinal axis.

15. Apparatus according to any one of claims 12 to 14, the apparatus further comprising a second interferometric device, a second scanner, and optionally a third interferometric device and a third scanner,
wherein the second interferometric device, and the second scanner are functionally arranged in the same way as the interferometric device and the scanner according to claim 12 in relation to another tangential plane of the outer surface of the hollow body,
wherein, if present, the third interferometric device, and the third scanner are functionally arranged in the same way as the interferometric device and the scanner according to claim 12 in relation to yet another tangential plane of the outer surface of the hollow body.

## Patentansprüche

1. Verfahren zum Messen mindestens einer Querschnittsabmessung eines zylinderförmigen Hohlkörpers (4), wobei der Hohlkörper (4) eine Wandung, die ein Lumen umgibt, eine Längsachse, eine Innenfläche und eine Außenfläche aufweist, wobei das Verfahren die folgenden Schritte umfasst:
- Bereitstellen eines zylinderförmigen Hohlkörpers (4),
- Lenken eines Lichtstrahls (3) mittels eines Scanners (2) entlang eines Fortbewegungswegs von einer interferometrischen Vorrichtung (1) zu der Außenfläche des Hohlkörpers (4) derart, dass mindestens ein Teil des Lichtstrahls zumindest in Abständen auf die Außenfläche des Hohlkörpers trifft, wobei der Lichtstrahl (3) ein fokussierter Lichtstrahl ist, der mittels Fokussierungsmitteln auf die Außenfläche des Hohlkörpers fokussiert wird,
- Empfangen eines Teils von Licht (3R), der an der Außenfläche reflektiert wird, und Empfangen eines Teils von Licht, der an der Innenfläche reflektiert wird, entlang des Fortbewegungswegs an der interferometrischen Vorrichtung (1), und
- Erhalten mindestens einer Querschnittsabmessung des Hohlkörpers (4) basierend auf einer interferometrischen Messung des Teils des Lichts (3R), der an der Außenfläche reflektiert wird, und des Teils des Lichts, der an der Innenfläche reflektiert wird,
**dadurch gekennzeichnet, dass** das Verfahren die folgenden Schritte umfasst:
- Verändern einer Ausrichtung des Fortbewegungswegs des Lichtstrahls (3) hin zu dem Hohlkörper (4), und wobei die mindestens eine Querschnittsabmessung des Hohlkörpers eine erste Wandungsdicke (WT1), einen Innendurchmesser (ID), eine zweite Wandungsdicke (WT2) beinhaltet und außerdem den Außendurchmesser (OD) beinhaltet.

2. Verfahren nach Anspruch 1, wobei der Hohlkörper ein Glasrohr oder ein Glasrohrstrang ist.

3. Verfahren nach Anspruch 2, wobei das Glasrohr oder der Glasrohrstrang von einer Produktionslinie, wie beispielsweise einem Vello- oder Down-Draw-Verfahren oder alternativ einem Danner-Verfahren, in eine Richtung, die im Wesentlichen parallel zu der Längsachse des Glasrohrstrangs liegt, befördert wird, und/oder wobei das Glasrohr oder der Glasrohrstrang um die Längsachse des Glasrohrs gedreht wird und/oder wobei das Glasrohr translatorisch zu der Längsachse des Glasrohrs bewegt wird.

4. Verfahren nach einem der Ansprüche 1 bis 3, wobei der Hohlkörper eine Glaszusammensetzung oder ein Polymermaterial umfasst oder daraus besteht, wobei die Glaszusammensetzung vorzugsweise bei einer Wellenlänge, oder alternativ in einem Wellenlängenbereich, des Lichtstrahls transparent ist, wobei das Polymermaterial vorzugsweise bei einer Wellenlänge, oder alternativ in einem Wellenlängenbereich, des Lichtstrahls transparent ist.

5. Verfahren nach einem der Ansprüche 1 bis 4, wobei der Hohlkörper eine gemäß ISO 25178 - 2:2012 bestimmte Oberflächenrauigkeit an der Außenfläche und der Innenfläche von 1 nm bis 5000 nm oder 10 nm bis 3000 nm oder 50 nm bis 2000 nm oder 70 nm bis 1000 nm oder 100 nm bis 500 nm aufweist.

6. Verfahren nach einem der Ansprüche 1 bis 5, wobei der fokussierte Lichtstrahl vorzugsweise kohärentes einfarbiges Licht umfasst oder daraus besteht.

7. Verfahren nach einem der Ansprüche 1 bis 6, wobei der Schritt des Lenkens eines Lichtstrahls durch den Scanner bewirkt wird, der bei einer mechanischen Scan-Frequenz zwischen 10 und 1000 Hz , vorzugsweise zwischen 200 und 300 Hz, betreibbar ist, und/oder wobei die Einrichtung bei einer Datenabtastfrequenz von bis zu 100 kHz, vorzugsweise zwischen 60 und 70 kHz betreibbar ist.

8. Verfahren nach einem der Ansprüche 1 bis 7, wobei der Schritt des Erhaltens der mindestens einen Querschnittsabmessung des Hohlkörpers einen Zeitstempel für jeden erhaltenen Wert aufzeichnet.

9. Verfahren nach Anspruch 3, wobei das Befördern des Glasrohrs mit einer Geschwindigkeit zwischen 0,001 und 6 m s⁻¹ vonstatten geht.

10. Verfahren nach einem der Ansprüche 1 bis 9, wobei die Wandung des zylinderförmigen Hohlkörpers eine Dicke von 0,1 bis 20,0 mm oder 0,2 bis 10,0 mm oder 0,3 bis 6,5 mm oder 0,5 bis 4,0 mm aufweist.

11. Verfahren nach einem der Ansprüche 1 bis 10, wobei das Verfahren die folgenden weiteren Schritte umfasst:
- Lenken eines zweiten Lichtstrahls entlang eines zweiten Fortbewegungswegs von einer zweiten interferometrischen Vorrichtung zu der Außenfläche des Hohlkörpers, und Empfangen eines Teils von Licht, der an einer anderen tangentialen Ebene der Außenfläche reflektiert wird, und eines Teils von Licht, der an einer anderen tangentialen Ebene der Innenfläche reflektiert wird, entlang des zweiten Fortbewegungswegs an der zweiten interferometrischen Vorrichtung; und optional
- Lenken eines dritten Lichtstrahls entlang eines dritten Fortbewegungswegs von einer dritten interferometrischen Vorrichtung zu der Außenfläche des Hohlkörpers und Empfangen eines Teils von Licht, der an noch einer anderen tangentialen Ebene der Außenfläche reflektiert wird, und eines Teils von Licht, der an noch einer anderen tangentialen Ebene der Innenfläche reflektiert wird, entlang des dritten Fortbewegungswegs an der dritten interferometrischen Vorrichtung.

12. Einrichtung zum Messen mindestens einer Querschnittsabmessung eines zylinderförmigen Hohlkörpers (4),
wobei die mindestens eine Querschnittsabmessung des Hohlkörpers eine erste Wandungsdicke (WT1), einen Innendurchmesser (ID), eine zweite Wandungsdicke (WT2) beinhaltet und außerdem den Außendurchmesser (OD) beinhaltet,
wobei die Einrichtung dazu ausgelegt ist, das Verfahren nach Anspruch 1 auszuführen, und mindestens eine interferometrisches Vorrichtung(1), Fokussierungsmittel und einen Scanner (2) umfasst,
wobei der Scanner (2) so angeordnet sein kann, dass er einen emittierten Lichtstrahl (3) von der mindestens einen interferometrischen Vorrichtung (1) entlang eines Fortbewegungswegs zu einer Außenfläche des Hohlkörpers (4) lenkt,
**dadurch gekennzeichnet, dass** der Scanner fähig ist, eine Ausrichtung des Fortbewegungswegs des emittierten Lichtstrahls (3) zu verändern.

13. Einrichtung nach Anspruch 12, wobei der Scanner aus der Liste aus einem piezoelektrischen Scanner, einem Galvanometerscanner, einem Prismenscanner und einem MEMS-Spiegelscanner ausgewählt ist,
und/oder wobei die interferometrische Vorrichtung ein Fizeau-Interferometer, ein Mach-Zehnder-Interferometer, ein Michelson-Interferometer oder ein Czerny-Turner-Spektrometer ist, wobei die interferometrische Vorrichtung vorzugsweise ein Czerny-Turner-Spektrometer ist.

14. Einrichtung nach Anspruch 12 oder Anspruch 13, wobei die Vorrichtung im Verhältnis zu einem Fördermittel montierbar ist, das zum Befördern eines zylinderförmigen Hohlkörpers in eine Richtung, die im Wesentlichen parallel zu der Längsachse des zylinderförmigen Hohlkörpers liegt, geeignet ist.

15. Einrichtung nach einem der Ansprüche 12 bis 14, wobei die Einrichtung ferner eine zweite interferometrisches Vorrichtung, einen zweiten Scanner und optional eine dritte interferometrisches Vorrichtung und einen dritten Scanner umfasst,
wobei die zweite interferometrische Vorrichtung und der zweite Scanner im Verhältnis zu einer anderen tangentialen Ebene der Außenfläche des Hohlkörpers funktional auf die gleiche Weise angeordnet sind wie die interferometrische Vorrichtung und der Scanner nach Anspruch 12,
wobei, falls vorhanden, die dritte interferometrische Vorrichtung und der dritte Scanner im Verhältnis zu noch einer anderen tangentialen Ebene der Außenfläche des Hohlkörpers funktional auf die gleiche Weise angeordnet sind wie die interferometrische Vorrichtung und der Scanner nach Anspruch 12.

## Revendications

1. Procédé pour mesurer au moins une dimension transversale d'un corps creux cylindrique (4), le corps creux (4) ayant une paroi entourant une lumière, un axe longitudinal, une surface intérieure et une surface extérieure, le procédé comprenant les étapes de :
- la fourniture d'un corps creux cylindrique (4),
- l'orientation d'un faisceau lumineux (3) au moyen d'un dispositif de balayage (2) le long d'un trajet de déplacement depuis un dispositif interférométrique (1) vers la surface extérieure du corps creux (4), de telle sorte qu'au moins une partie du faisceau lumineux frappe au moins par intermittence la surface extérieure du corps creux, le faisceau lumineux (3) étant un faisceau lumineux focalisé par des moyens de focalisation sur la surface extérieure du corps creux,
- la réception d'une partie de lumière (3R) réfléchie à la surface extérieure et la réception d'une partie de lumière réfléchie à la surface intérieure le long du trajet de déplacement au niveau du dispositif interférométrique (1), et
- l'obtention d'au moins une dimension transversale du corps creux (4) sur la base d'une mesure interférométrique de la partie de lumière (3R) réfléchie à la surface extérieure et de la partie de lumière réfléchie à la surface intérieure,
**caractérisé en ce que** le procédé comprend l'étape consistant à
- faire varier une orientation du trajet de déplacement du faisceau lumineux (3) vers le corps creux (4), et
l'au moins une dimension transversale du corps creux comprenant une première épaisseur de paroi (WT1), un diamètre intérieur (ID), une seconde épaisseur de paroi (WT2), et comprenant également le diamètre extérieur (OD).

2. Procédé selon la revendication 1, le corps creux étant un tube en verre ou un brin de tube en verre.

3. Procédé selon la revendication 2, le tube en verre ou le brin de tube en verre étant transporté à partir d'une ligne de production, telle qu'un procédé Vello ou d'étirage descendant, ou en variante un procédé Danner, dans une direction sensiblement parallèle à l'axe longitudinal du brin de tube en verre, et/ou
le tube en verre ou le brin de tube en verre étant mis en rotation autour de l'axe longitudinal du tube en verre et/ou le tube en verre étant déplacé en translation par rapport à l'axe longitudinal du tube en verre.

4. Procédé selon l'une quelconque des revendications 1 à 3, le corps creux comprenant ou étant constitué d'une composition de verre ou d'un matériau polymère, la composition de verre étant de préférence transparente à une longueur d'onde, ou en variante à une plage de longueurs d'onde, du faisceau lumineux, et le matériau polymère étant de préférence transparent à une longueur d'onde, ou en variante à une plage de longueurs d'onde, du faisceau lumineux.

5. Procédé selon l'une quelconque des revendications 1 à 4, le corps creux ayant une rugosité de surface sur la surface extérieure et la surface intérieure de 1 nm à 5000 nm, ou de 10 nm à 3000 nm, ou de 50 nm à 2000 nm, ou de 70 nm à 1000 nm, ou de 100 nm à 500 nm, déterminée selon la norme ISO 25178-2 :2012.

6. Procédé selon l'une quelconque des revendications 1 à 5, le faisceau lumineux focalisé comprenant de préférence une lumière cohérente et monochromatique, ou étant constitué d'une telle lumière.

7. Procédé selon l'une quelconque des revendications 1 à 6, l'étape consistant à diriger un faisceau lumineux étant effectuée par le dispositif de balayage pouvant fonctionner à une fréquence de balayage mécanique comprise entre 10 et 1000 Hz, de préférence entre 200 et 300 Hz, et/ou l'appareil pouvant fonctionner à une fréquence d'échantillonnage de données allant jusqu'à 100 kHz, de préférence entre 60 et 70 kHz.

8. Procédé selon l'une quelconque des revendications 1 à 7, l'étape d'obtention de l'au moins une dimension transversale du corps creux enregistrant un horodatage pour chaque valeur obtenue.

9. Procédé selon la revendication 3, le transport du tube en verre se déroulant à une vitesse comprise entre 0,001 et 6 m s⁻¹.

10. Procédé selon l'une quelconque des revendications 1 à 9, la paroi du corps creux cylindrique présentant une épaisseur de 0,1 à 20,0 mm, ou de 0,2 à 10,0 mm, ou de 0,3 à 6,5 mm, ou de 0,5 à 4,0 mm.

11. Procédé selon l'une quelconque des revendications 1 à 10, le procédé comprenant les étapes supplémentaires suivantes
- l'orientation d'un deuxième faisceau lumineux le long d'un deuxième trajet de déplacement depuis un deuxième dispositif interférométrique vers la surface extérieure du corps creux, et la réception d'une partie de lumière réfléchie au niveau d'un autre plan tangentiel de la surface extérieure et une partie de lumière réfléchie au niveau d'un autre plan tangentiel de la surface intérieure le long du deuxième trajet de déplacement au niveau du deuxième dispositif interférométrique ; et éventuellement
- l'orientation d'un troisième faisceau lumineux le long d'un troisième trajet de déplacement depuis un troisième dispositif interférométrique vers la surface extérieure du corps creux et la réception d'une partie de lumière réfléchie au niveau d'un autre plan tangentiel encore de la surface extérieure et une partie de lumière réfléchie au niveau d'un autre plan tangentiel encore de la surface intérieure le long du troisième trajet de déplacement au niveau du troisième dispositif interférométrique.

12. Appareil pour mesurer au moins une dimension transversale d'un corps creux cylindrique (4),
l'au moins une dimension transversale du corps creux comprenant une première épaisseur de paroi (WT1), un diamètre intérieur (ID), une seconde épaisseur de paroi (WT2), et comprenant également le diamètre extérieur (OD),
l'appareil étant configuré pour mettre en œuvre le procédé selon la revendication 1 et comprenant au moins un dispositif interférométrique (1), des moyens de focalisation et un dispositif de balayage (2),
le dispositif de balayage (2) pouvant être disposé pour diriger un faisceau lumineux émis (3) depuis l'au moins un dispositif interférométrique (1) le long d'un trajet de déplacement vers une surface extérieure du corps creux (4),
**caractérisé en ce que** le dispositif de balayage est capable de faire varier une orientation du trajet de déplacement du faisceau lumineux émis (3).

13. Appareil selon la revendication 12, le dispositif de balayage étant sélectionné dans la liste constituée d'un dispositif de balayage piézoélectrique, d'un dispositif de balayage galvanométrique, d'un dispositif de balayage à prisme et d'un dispositif de balayage à miroir MEMS,
et/ou le dispositif interférométrique étant un interféromètre de Fizeau, un interféromètre de Mach-Zehnder, un interféromètre de Michelson ou un spectromètre de Czerny-Turner, de préférence le dispositif interférométrique étant un spectromètre de Czerny-Turner.

14. Appareil selon la revendication 12 ou la revendication 13, l'appareil pouvant être monté par rapport à un moyen de transport approprié pour transporter un corps creux cylindrique dans une direction sensiblement parallèle à l'axe longitudinal du corps creux cylindrique.

15. Appareil selon l'une quelconque des revendications 12 à 14, l'appareil comprenant en outre un deuxième dispositif interférométrique, un deuxième dispositif de balayage, et éventuellement un troisième dispositif interférométrique et un troisième dispositif de balayage, le deuxième dispositif interférométrique et le deuxième dispositif de balayage étant agencés fonctionnellement de la même manière que le dispositif interférométrique et le dispositif de balayage selon la revendication 12 par rapport à un autre plan tangentiel de la surface extérieure du corps creux,
et, s'ils sont présents, le troisième dispositif interférométrique et le troisième dispositif de balayage étant agencés fonctionnellement de la même manière que le dispositif interférométrique et le dispositif de balayage selon la revendication 12 par rapport à encore un autre plan tangentiel de la surface extérieure du corps creux.
